# EUROPEAN PATENT SPECIFICATION

(11) **EP 1 028 443 B1**
(45) Date of publication and mention of the grant of the patent: **06.08.2003**
(21) Application number: 00301063.4
(22) Date of filing: 10.02.2000
(51) Int. Cl.: H01H 3/12

(54) **Key switch device, keyboard and electronic apparatus with key switch device**
Tastschalter, Tastatur und ein elektronisches Gerät mit einem solchen Tastschalter
Commutateur à touche, clavier et appareil électronique avec ce commutateur à touche

(30) Priority: 10.02.1999 JP 3260899; 28.09.1999 JP 27372299
(43) Date of publication of application: 16.08.2000
(60) Divisional application: 03006673.2
(73) Proprietor: BROTHER KOGYO KABUSHIKI KAISHA, Nagoya-shi, Aichi-ken 467 (JP)
(72) Inventor: Kako, Mitsumasa, Tokai-shi, Aichi 476-0011 (JP); Mochizuki, Isao, Kaizu-gun, Gifu 503-0534 (JP)
(74) Representative: Senior, Alan Murray

(56) References cited:
- EP-A- 0 543 649
- EP-A- 0 696 038
- US-A- 5 562 203
- US-A- 5 799 772

## Description

The present invention relates to a key switch device having a guide member provided with two link members mutually rotatably disposed, one link member being supported at an upper end thereof with respect to an underside of a key top and at a lower end thereof to a support plate and the other link member being supported at an upper end thereof to the underside of the key top and a lower end thereof to the support plate, the guide member functioning of guiding vertical movement of the key top to thereby effect a switching operation. In particular, the present invention relates to a key switch device having mounting members for movably supporting the lower ends of the link members respectively, the mounting members being fixed on the support plate by a predetermined fixing manner, which can reduce manufacturing cost of the support plate and increase design flexibility of a keyboard provided with a plurality of the key switch devices.

Furthermore, the present invention relates to a key switch device having a film sheet for performing a switching operation, the film sheet being disposed below a key top, and mounting members for movably supporting each lower end of two link members of a guide member, the mounting members being fixed on the film sheet, which can reduce manufacturing cost and increase design flexibility of a keyboard provided with a plurality of the key switch devices, and achieve weight reduction of the keyboard.

Furthermore, the present invention relates to a key switch device having a circuit board disposed below a key top, and mounting members for movably supporting each lower end of two link members of a guide member, the mounting members being fixed on the circuit board by a predetermined fixing manner, thereby the key switch can reduce manufacturing cost and increase design flexibility of a keyboard provided with a plurality of the key switch devices, and achieve weight reduction of the keyboard.

Furthermore, the present invention relates to a keyboard and an electronic apparatus in which the above key switch devices are arranged.

Conventionally, there have been proposed key switch devices each having a guide member constructed of a pair of link members mutually movably connected in an intersecting state, and the guide member serves to guide the vertical movement of a key top to effect a switching operation in association with the vertical movement of the key top. For example, such a key switch is disclosed in Japanese utility model application laid-open No. Hei 2-5236. This key switch is provided with a key top, an upper holder attached to an underside of the key top, a first lower holder and a second lower holder attached to a printed substrate, and two rectangular frames connected to each other in an X-shaped configuration as viewed in side elevation, which is disposed between the key top and the printed substrate.

In this key switch, an upper portion of one of the rectangular frames is slidably supported in the upper holder between the lower surface of the key top and the upper holder, while leg portions of the rectangular frame are rotatably supported in the first holder. On the other hand, an upper portion of the other rectangular frame is rotatably supported in a groove of the upper holder, while leg portions of the rectangular frame are slidably supported in the second holder. Furthermore, a rubber switch is disposed on the printed substrate, and a convex portion of the key top, projecting downward, is engaged with the rubber switch. The rubber switch is provided with a movable contact disposed corresponding to a fixed contact disposed on the printed substrate.

The above key switch is configured such that the key top is vertically moved with its horizontal position being maintained, no matter which portion of the key top is depressed by an operator. Accordingly, the movable contact of the rubber switch engaged with the key top is made into contact with the fixed contact of the printed substrate whenever the rubber switch is pushed upon depression of the key top, thus effecting a switching operation.

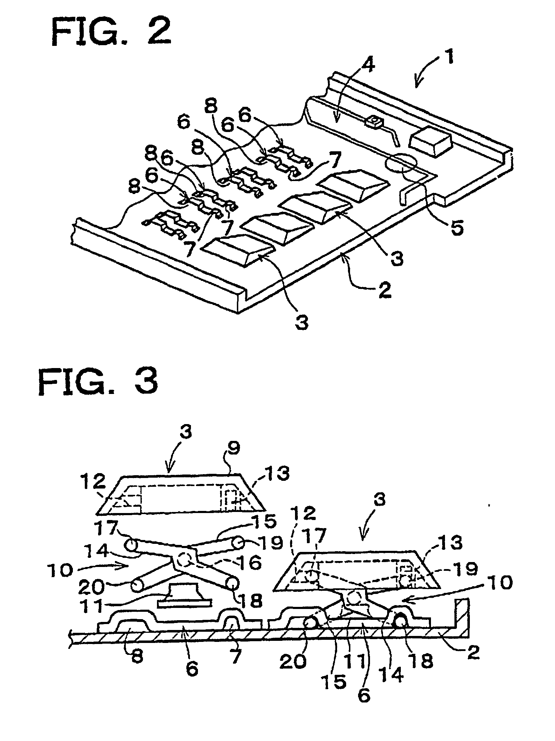

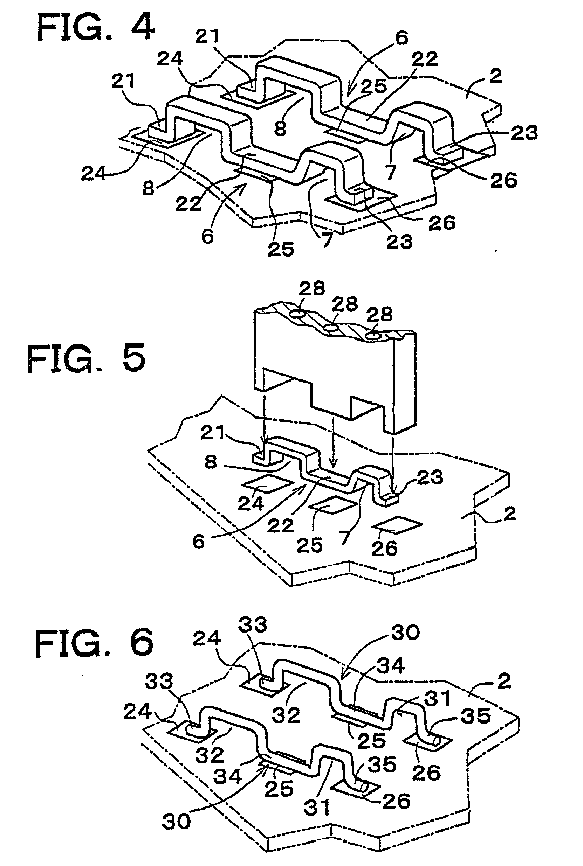

However, in the above key switch disclosed in Japanese utility model application laid-open publication No. Hei 2-5236, the first and second lower holders attached to the printed substrate are all inserted in mounting holes formed in the printed substrate (see Figs. 2 and 4 in the publication) and fixed therein. Therefore, each lower end of the first and second lower holders is made projecting downward from a lower surface of the printed substrate.

Such projecting lower ends of the first and second lower holders may cause a difficulty in thickness reduction of the key switch and be against actual circumstances that the reduction of the thickness of a key switch is promoted.

To conform the need of reduction in size and thickness of a keyboard with a sufficient key stroke being ensured, applicant of the present invention proposed a key switch device which is disclosed in U.S. Patent No. 5,504,283, in which an electrical circuit pattern is formed on an insulating layer provided on a metal substrate, and four mounting portions are formed integrally with the substrate by pressing and disposed surrounding a fixed contact pattern in the circuit pattern. Two of the four mounting portions are used as rotatably supporting portions, and the other two are used as slidably supporting portions.

In the above switch device, a guide supporting member constructed of two link members which are mutually rotatably connected is disposed between the key top and the substrate. A support shaft formed at an upper end of one of the link members is rotatably supported in the connecting portion formed on the underside of the key top and a support pin formed at a lower end of the link member is slidably supported in the slidably supporting portion of the substrate. A support pin formed at an upper end of the other link member is slidably supported in the connecting portion formed on the underside of the key top and a support shaft formed at a lower end of the link member is rotatably supported in the rotatably supporting portion of the substrate.

In the key switch disclosed in the U.S. Patent No. 5,504,283, the metal substrate is formed integrally with the mounting portions (supporting portions) by pressing, the mounting portions serving to slidably or rotatably support the support pins or shafts disposed on the lower parts of the link members. Thus, this realizes a key switch device which can ensure a sufficient key stroke and reduce the size of the keyboard, especially the thickness thereof.

However, a predetermined pressing work to integrally form the mounting portions with the substrate needs a relatively large pressing die in order to form the mounting portions in the whole area of the substrate. Since the pressing die is expensive, the cost of the key switch device is increased in association therewith.

Furthermore, specifications such as the placement manner of key switches are generally determined in respective countries. If the key switch device is manufactured based on the specifications in the countries where the key switch device is to be used, plural types of a pressing die must be prepared to perform a suitable pressing work on a substrate in response to the respective specifications. Accordingly, the preparation of plural pressing dies, each being inherently expensive in cost, may cause the increase in cost of the key switch device.

Furthermore, the metal substrate itself used in the above key switch device is considerably heavy, so that the whole key switch device increases in weight. This obstructs weight reduction of the key switch device.

US 5,799,772, upon which the precharacterising portion of appended claim 1 is based, describes a pantograph type keyboard switch with a leaf spring projecting from a linkage member and slidably engaging the underside of a keytop. The resulting reaction force is used to remove play between the keytop and the linkage member. Further, a frictional slope is formed in each slide groove in the underside of the keytop so that frictional force increases as the keytop approaches the top dead point position. The lower portions of the pantograph are pivotably supported on a housing wall, itself laminated with a backing board.

The present invention has been made in view of the above circumstances and has an object to overcome the above problems and to provide a key switch device having mounting members for movably supporting lower ends of two link members of a guide member guiding vertical movement of a key top, the mounting members being fixed on a support plate by a predetermined one of various fixing manners, thus eliminating the need of a pressing die used in the prior art, so that the key switch device can reduce the manufacturing cost of the support plate and increase the design flexibility of a keyboard provided with a plurality of the key switch devices.

Another object of the present invention is providing a key switch device having mounting members for movably supporting lower ends of two link members of a guide member which guides vertical movement of a key top, the mounting members being fixed on a membrane switch member for conducting a switching operation by a predetermined fixing manner, thus eliminating the need of a pressing die used in the prior art, differently from the case where supporting portions are integrally formed in a support plate, so that the key switch device can reduce the manufacturing cost of the support plate, increase the design flexibility of a keyboard provided with a plurality of the key switch devices, and easily enable weight reduction.

Furthermore, another object of the present invention is to provide a key switch device having mounting members for movably supporting lower ends of two link members of a guide member which guides vertical movement of a key top, the mounting members being fixed on a circuit board by a predetermined fixing manner, thus eliminating the need of a pressing die used in the prior art, differently from the case where supporting portions are integrally formed in a support plate, so that the key switch device can reduce the manufacturing cost of the support plate, increase the design flexibility of a keyboard provided with a plurality of the key switch devices, and easily enable weight reduction.

Additional objects and advantages of the invention will be set forth in part in the description which follows and in part will be obvious from the description, or may be learned by practice of the invention. The objects and advantages of the invention may be realized and attained by means of the instrumentalities and combinations particularly pointe in the appended claims.

According to the present invention, there is provided a key switch device including:
a key top;
a plate member disposed below the key top;
a guide member provided with a first link and a second link which are mutually movably connected; and
a switching section which is disposed on the plate member and performs a switching operation in association with a vertical movement of the key top;
wherein the key switch device includes:
a first shaft formed at a lower end of the first link;
a second shaft formed at a lower end of the second link; and
a mounting member for movably supporting the first and second shafts, the mounting member being fixed on a surface of the plate member; characterised in that
the plate member is a circuit board disposed below the key top, the circuit board having a switching circuit formed thereon and the mounting member being fixed on an upper surface of the circuit board; and further comprising:
   a fixing area formed on the circuit board, for fixing the mounting member on the circuit board; wherein
   the fixing area is a metal land pattern formed when the switching circuit is formed on the circuit board.

The plate member may be constructed from a support plate and the mounting member is fixed on a surface of the support plate.

In the above key switch device, the mounting member is fixed on the surface of the support plate and movably supports the first and second shafts formed at the lower ends of the first and second links respectively of the guide member for guiding the vertical movement of the key top. Accordingly, the support plate has no need to be integrally formed with supporting portions for mounting the guide member by a press working and the like.
This eliminates the necessity of an expensive pressing die, thus enabling the reduction of manufacturing cost of the support plate.

Even if the specifications such as the placement of the key switch devices in a keyboard are different according to countries where the key switch device is to be used, it is sufficient to fix an appropriate mounting member on the support plate in agreement with the specifications on a country-to-country basis. This can increase the design flexibility of a keyboard having the key switch devices without preparation of a pressing die for the specifications in each country.

The plate member may be constructed from a membrane switch member and the mounting member is fixed on a surface of the membrane switch member.

In the above key switch device, the mounting member is fixed on the surface of the membrane switch member and movably supports the first and second shafts formed at the lower ends of the first and second links respectively of the guide member for guiding the vertical movement of the key top. Accordingly, a support plate has no need to be integrally formed with supporting portions by a press working and the like. This eliminates the necessity of an expensive pressing die, thus enabling the reduction of manufacturing cost of the key switch device.

Even if the specifications such as the key placement are different according to countries where the key switch device is to be used, it is sufficient to fix an appropriate mounting member on the membrane switch member in agreement with the specifications on a country-to-country basis. This can increase the design flexibility of a keyboard having the key switch devices without preparation of a pressing die for the specifications in each country.

Since the mounting member is fixed on the surface of the membrane switch member, a support plate may be eliminated, which achieves the weight reduction of the key switch device.

The plate member is constructed from a circuit board and the mounting member is fixed on a surface of the circuit board.

In the above key switch device, the mounting member is fixed on the surface of the circuit board and movably supports the first and second shafts formed at the lower ends of the first and second links respectively of the guide member for guiding the vertical movement of the key top. Accordingly, a support plate has no need to be integrally formed with supporting portions by a press working and the like. This eliminates the necessity of an expensive pressing die, thus enabling the reduction of manufacturing cost of the key switch device.

Even if the specifications such as the key placement are different according to countries where the key switch device is to be used, it is sufficient to fix an appropriate mounting member on the circuit board in agreement with the specifications on a country-to-country basis. This can increase the design flexibility of a keyboard having the key switch devices without preparation of a pressing die for the specifications in each country.

Since the mounting member is fixed on the surface of the circuit board, a support plate may be eliminated, which achieves the weight reduction of the key switch device.

The accompanying drawings, which are incorporated in and constitute a part of this specification illustrate an embodiment of the invention and, together with the description, serve to explain the objects, advantages and principles of the invention.

In the drawings,
Fig. 1 is a schematic side view of a keyboard provided with key switch devices;
Fig. 2 is a schematic perspective partial view of a keyboard , where some of key tops of the key switch devices are omitted;
Fig. 3 is a schematic side view of key switch devices , one of which is shown in an exploded state;
Fig. 4 is a perspective view of mounting members fixed on a support plate of the key switch device;
Fig. 5 is an explanatory view showing a fixing manner to fix a mounting member on a support plate with use of a suction head;
Fig. 6 is a perspective view of mounting members fixed on a support plate in a key switch device ;
Fig. 7 is a schematic side view of key switch devices, one of which is shown in an exploded state;
Fig. 8 is an explanatory view of a spot welding manner to fix mounting members on a support plate;
Fig. 9 is an explanatory view of a soldering manner to fix mounting members on a support plate;
Fig. 10 is an explanatory view of a laser-welding manner to fix mounting members on a support plate;
Fig. 11 is an explanatory view of an ultrasonic welding manner to fix mounting members on a support plate;
Fig. 12 is an explanatory view showing a caulking manner to fix mounting members on a support plate;

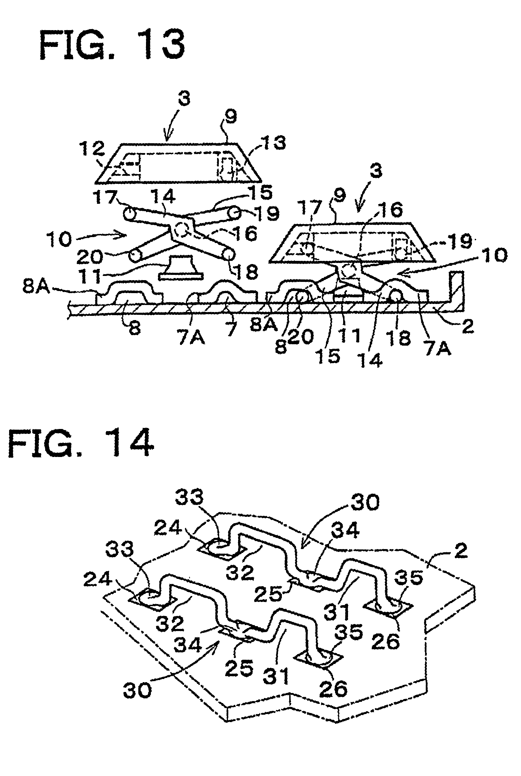

Fig. 13 is a side view of an alternative of a key switch devices;
Fig. 14 is a perspective view of a key switch devices;

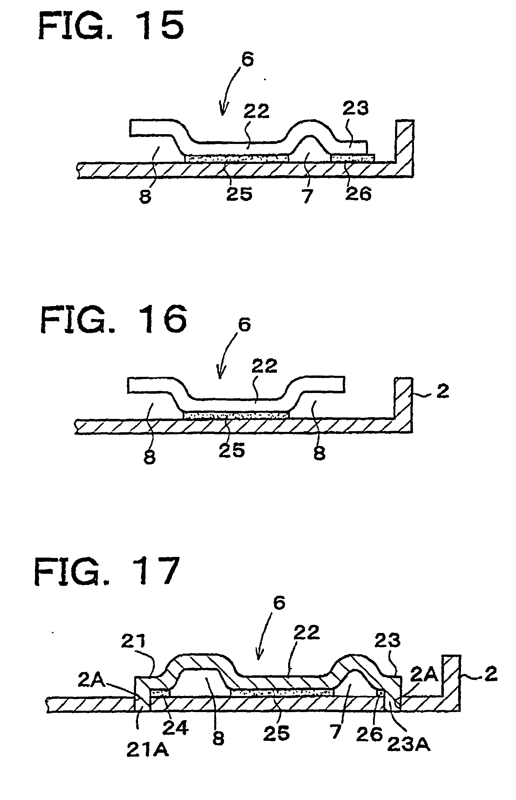

Fig. 15 is a side view of a mounting member, fixed on a support plate;
Fig. 16 is a side view of a mounting member, fixed on a support plate;
Fig. 17 is a side view of a mounting member, fixed on a support plate;
Fig. 18 is a schematic side view of a keyboard ;

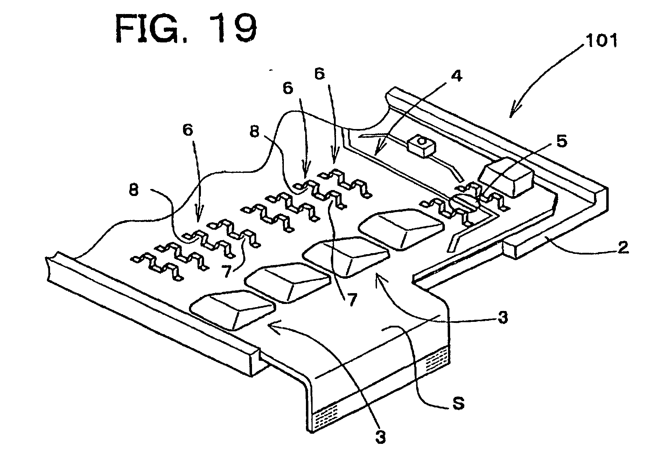

Fig. 19 is a schematic perspective partial view of a keyboard, where some of key tops of the key switch devices are omitted;

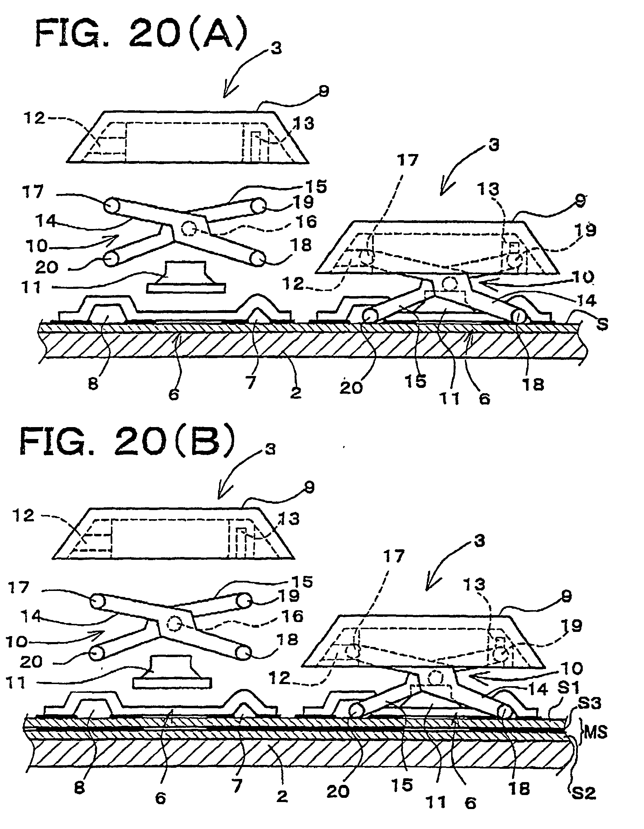

Fig. 20A is a schematic side view of key switch devices, one of which is shown in an exploded state;
Fig. 20B is a schematic side view of a key switch device one of which is shown in an exploded state;

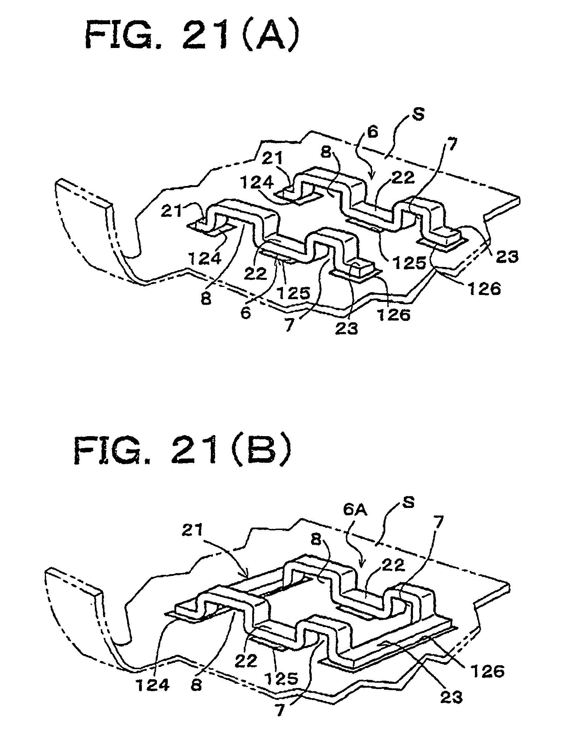

Fig. 21A is a perspective view of mounting members fixed on a PET film sheet in the key switch device;
Fig. 21B is a perspective view of a modification of the mounting member fixed on the PET film sheet;

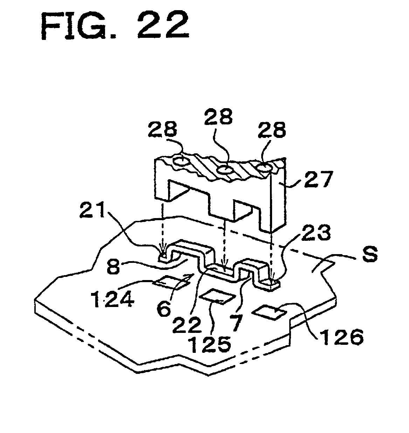

Fig. 22 is a schematic perspective view of the mounting member when fixed on the PET film sheet with use of a suction head;

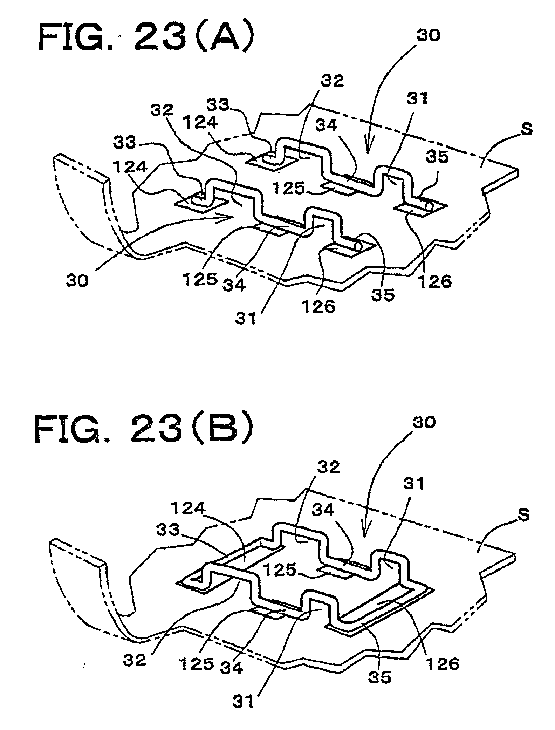

Fig. 23A is a perspective view of the mounting members fixed on the PET film sheet in a key switch device;
Fig. 23B is a perspective view of a modification of the mounting members fixed on the PET film sheet in a key switch device;

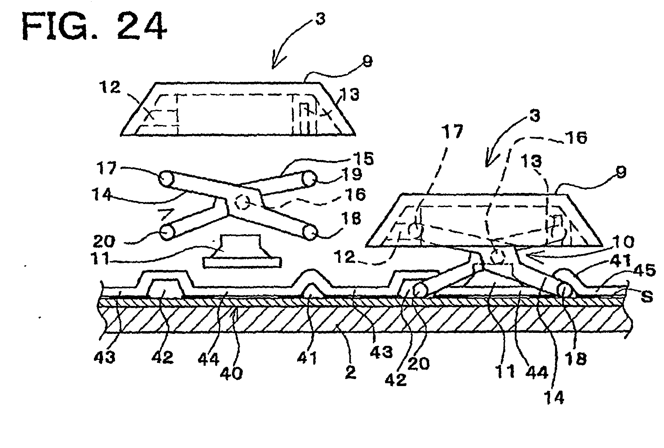

Fig. 24 is a schematic side view of a key switch devices, one of which is shown in an exploded state;
Fig. 25A is a schematic perspective view of the mounting members when fixed by soldering on a rigid circuit board in the key switch device according to the present invention;
Fig. 25B is a schematic perspective view of the mounting member fixed on an another modification of the rigid circuit board;
Fig. 25C is schematic perspective view of the mounting member fixed on an another modification of the rigid circuit board;

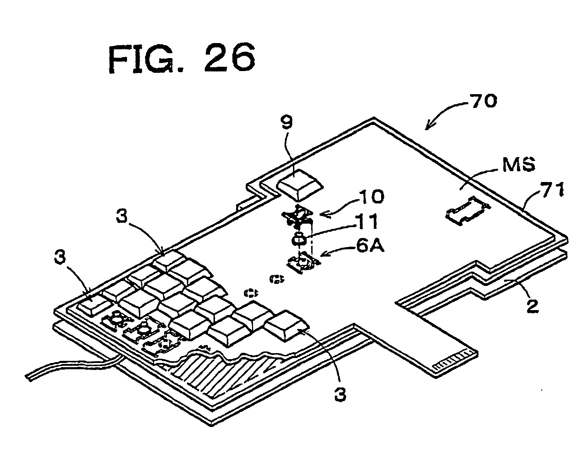

Fig. 26 is a perspective view of a keyboard provided with key switch devices ;

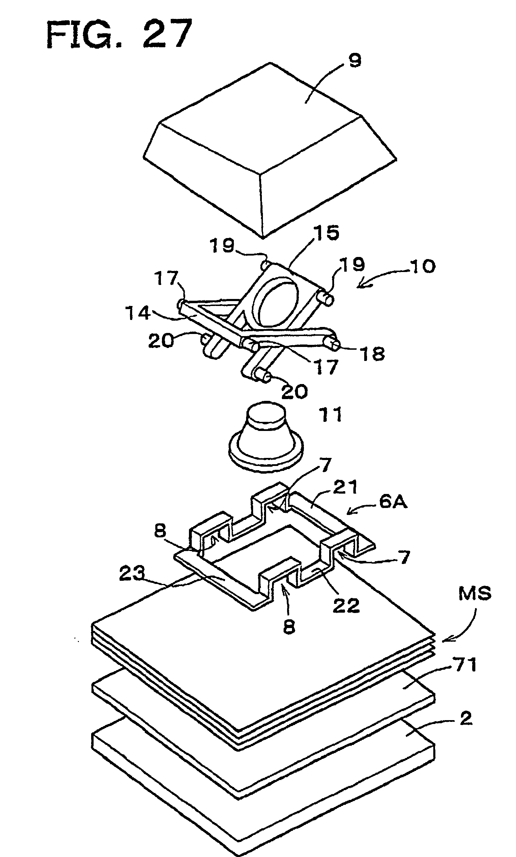

Fig. 27 is an exploded perspective view of a key switch device;

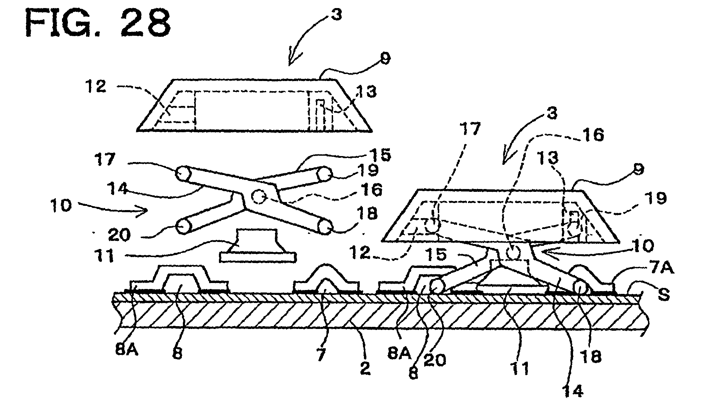

Fig. 28 is a schematic side view of key switch devices, one of which is shown in an exploded state;

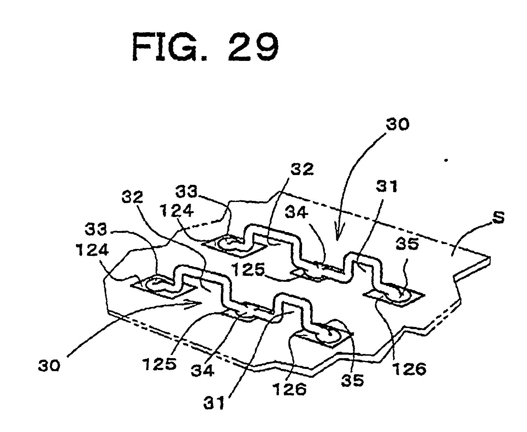

Fig. 29 is a schematic perspective view of a modification of the mounting members fixed on the PET film sheet in the key switch device;

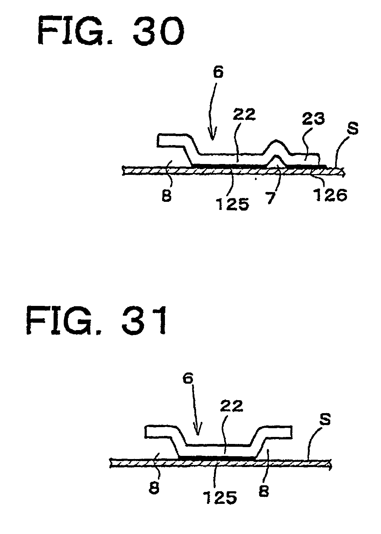

Fig. 30 is a schematic side view of the a modification of the mounting member;
Fig. 31 is a schematic side view of a modification of the mounting member;

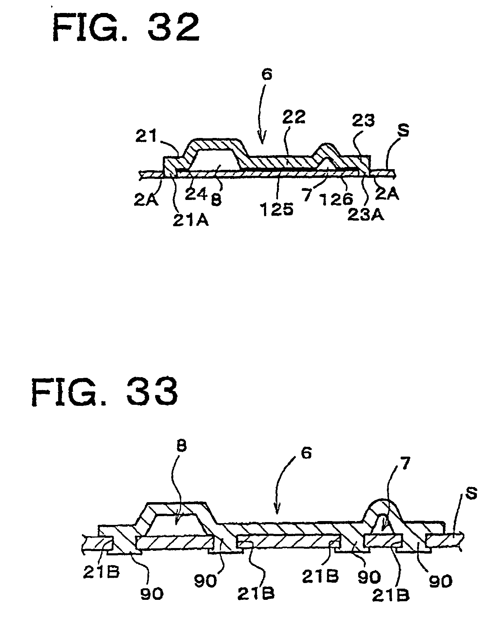

Fig. 32 is a schematic side view of a modification of the mounting member;
Fig. 33 is a schematic side view of a modification of the mounting member;
Fig. 34 is a schematic side view of a modification of the mounting member;
Fig. 35 is a schematic side view of a modification of the mounting member;
Fig. 36 is a schematic perspective view of a modification of the key switch device when the mounting members are fixed on the PET film sheet, instead of rigid circuit board;
Fig. 37 is a schematic perspective view of an another modification of the key switch device when the mounting members are fixed on the PET film sheet, instead of rigid circuit board; and
Fig. 38 is a schematic perspective view of a notebook-size personal computer.

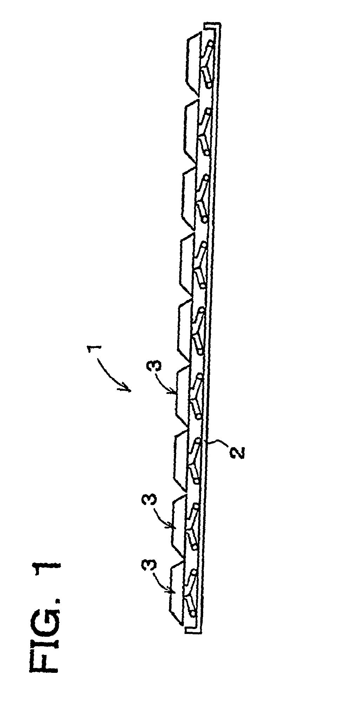

Figures 1, 9 to 11, 25, 36 and 37 relate to the present invention, the others are provided for clarification purposes only.

A detailed description of a key switch device embodying the present invention will now be given referring to the accompanying drawings.

First, the structure of a keyboard having a plurality of key switch devices arranged on a support plate is described below. Fig. 1 is a schematic side view of the keyboard. Fig. 2 is a schematic perspective view of a part of the keyboard, in which some of key tops of the key switch devices are omitted.

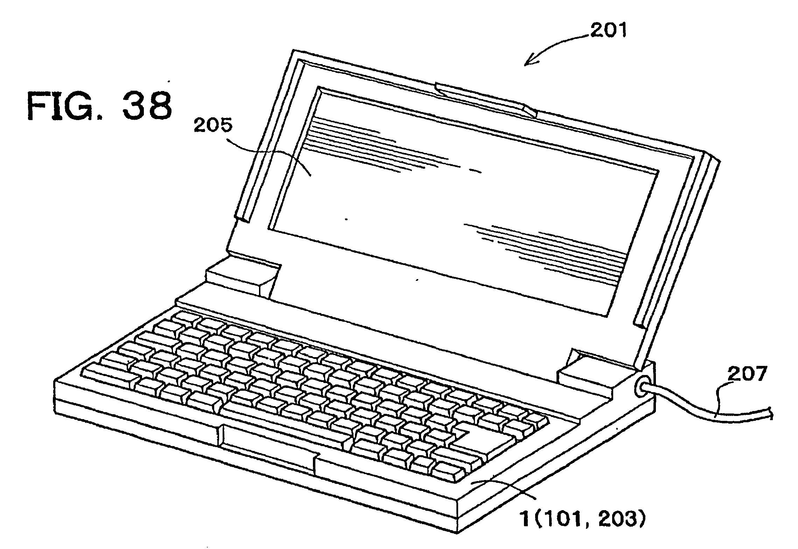

The keyboard is mounted on a notebook-size personal computer shown in Fig. 38. This notebook-size personal computer 201 is mainly provided with the keyboard 1, a liquid crystal display 205, and a power cord 207 through which electric power is supplied to the computer 201.

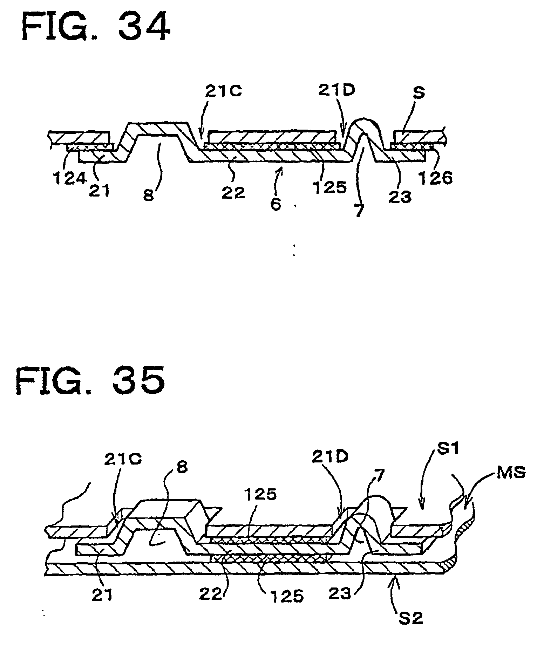

As shown in Fig. 1, the keyboard 1 is provided with a thin support plate 2 made of aluminum and a plurality of key switch devices 3. Those key switch devices 3 are arranged on the plate 2 in the longitudinal and transverse directions thereof as shown in Figs. 2 and 34. An electrical insulating layer (not shown) is formed on the surface of the support plate 2 and a predetermined circuit pattern 4 is formed with a conductive ink and the like on the electrical insulating layer. A fixed contact pattern 5 is formed at a substantially center in each of the areas where the key switch devices 3 are disposed one-by-one on the circuit pattern 4. The circuit pattern 4 with the contact pattern 5 is used to detect whether or not the key switch device 3 has been depressed.

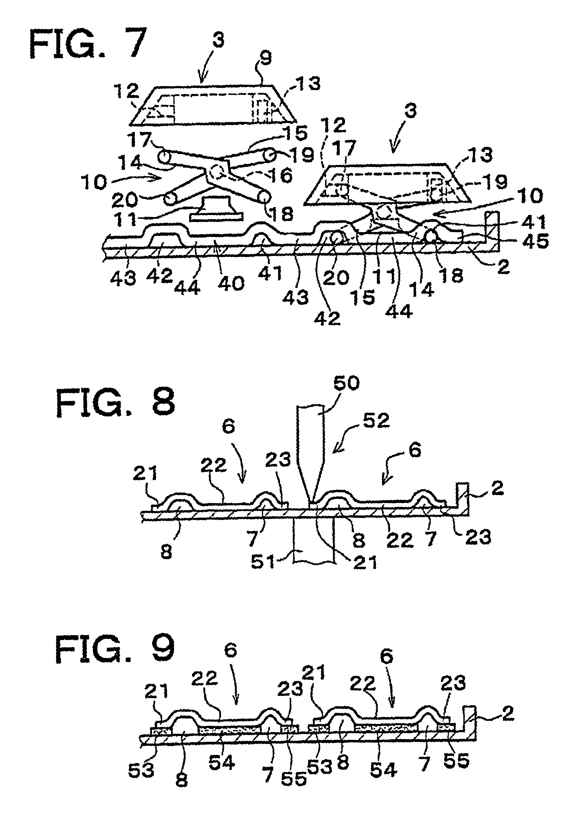

A soldering manner may be used for fixing the mounting member 6 on the support plate 2. This manner is explained below with reference to Fig. 9.

To fix the mounting member 6 on the support plate 2 by the soldering, the support plate 2 which has been formed into a predetermined shape is set in a predetermined position with respect to an automatic soldering device. Then, first, second, and third cream soldering layers 53, 54, and 55 are applied onto the support plate 2 in correspondence to the key switch device 3. Thereafter, with an automatic mounting device loading the mounting member 6 chipped as above, the mounting member 6 is placed on the support plate 2 such that the first, second, and third adhering portions 21, 22, and 23 correspond to the first, second, and third cream soldering layer 53, 54, and 55, respectively. The reflow soldering process is then carried out. As a result, the mounting member 6 is soldered to the support plate 2.

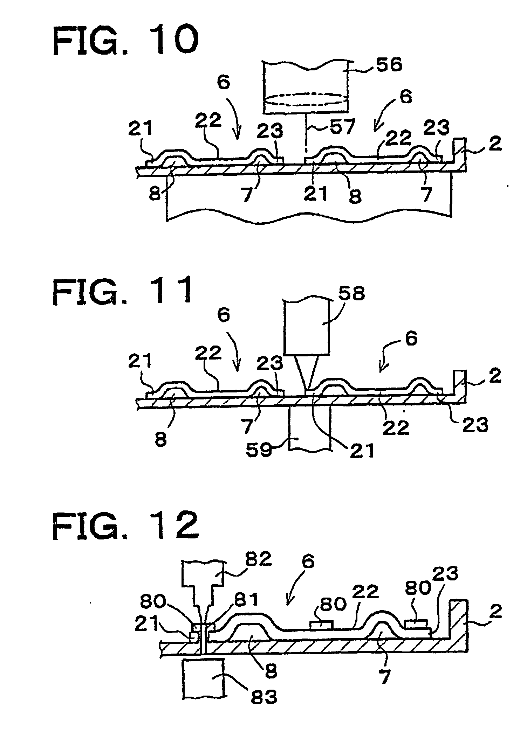

Alternatively, a laser-welding manner may be used for fixing the mounting member 6 on the support plate 2. This manner is explained below with reference to Fig. 10.

To fix the mounting member 6 on the support plate 2 by the laser welding, the support plate 2 which has been formed into a predetermined shape is set in a predetermined position. With an automatic mounting device loading the mounting member 6 chipped as above, the mounting member 6 is placed in a predetermined position on the support plate 2. At this time, the mounting member 6 is preferably fixed temporarily in the predetermined position with an adhesive which will not interfere with the laser-welding. A laser-welding device is operated to consecutively emit a laser beam 57 from a laser head 56 to the first, second, and third adhering portions 21, 22, and 23 from above. As a result, the mounting member 6 is fixed on the support plate 2.

Alternatively, an ultrasonic welding manner may be used for fixing the mounting member 6 on the support plate 2. This manner is explained below with reference to Fig. 11.

To fix the mounting member 6 on the support plate 2 by the ultrasonic welding, first, the support plate 2 which has been formed into a predetermined shape is set in a predetermined position. With an automatic mounting device loading the mounting member 6 chipped as above, the mounting member 6 is placed in a predetermined position on the support plate 2. At this time, the mounting member 6 is preferably fixed temporarily in the predetermined position with an adhesive which will not interfere with the ultrasonic welding. An ultrasonic welding device provided with a pair of horns 58 and 59 is used. The upper horn 58 is made into contact with the first adhering portion 21 and the lower horn 59 is made into contact with the support plate 2. Then, highfrequency is applied between the upper and lower horns 58 and 59. This work is repeated in sequence on the second and third adhering portions 22 and 23. The mounting member 6 is thus ultrasonic-welded to the support plate 2.

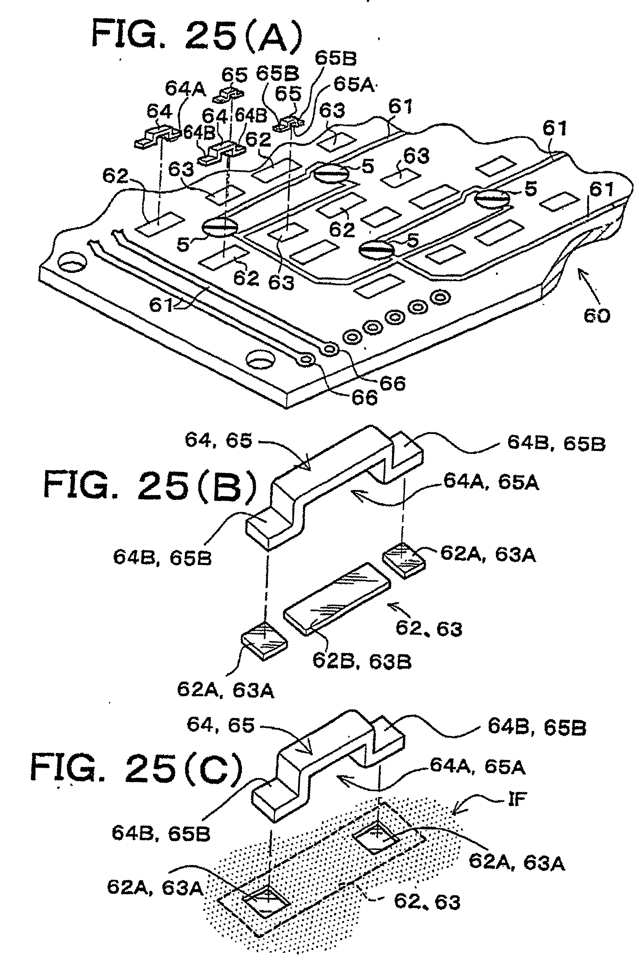

The key switch devices will be described below with reference to Fig. 25A. In the key switch device the mounting member, is made of metal and is fixed by soldering on metal land patterns formed adjacent to a fixed contact pattern on a rigid circuit board, while the mounting member 6 is fixed on the PET film sheet S with an adhesive. The following description is focused on the specific feature to the key switch device 3. Fig. 25A is a schematic perspective view of mounting members when fixed by soldering on a rigid circuit board in the key switch device.

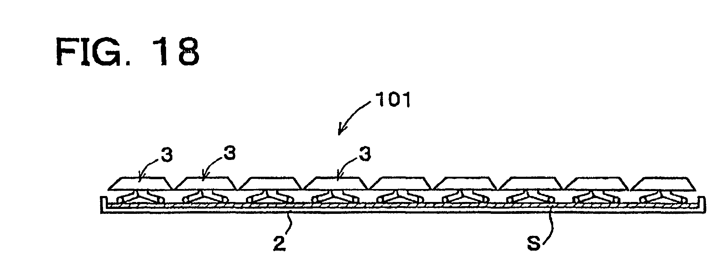

In Fig. 25A, a rigid circuit board 60 may be a printed circuit board formed of a paper base material and phenolic resin, or a glass base material and epoxy resin. On the upper surface of the rigid circuit board 60, a plurality of key switch devices 3 are arranged. The circuit board 60 serves to support the keyboard 1 when constructed (see Fig. 18). On the upper surface of the circuit board 60, a predetermined copper foil circuit 61 is formed. A fixed contact pattern 5 is formed at a substantially center within the area associated with each key switch 3 in the copper foil circuit 61.

Copper foil land patterns 62 and 63 are formed at four positions surrounding the fixed contact pattern 5. The land pattern 62 is provided for fixing both fixing ends 64B of a metal slidably supporting member 64 so as to slidably support the slidable shaft 20 formed at the lower end of the second link 15 of the guide member 10. The land pattern 63 is provided for fixing both fixing ends 65B of a metal rotatably supporting member 65 so as to rotatably support the rotatable shaft 18 formed at the lower end of the first link 14.

The rigid circuit board 60 is formed in the following manner; copper foil is applied to an insulating material formed of a paper base material and phenolic resin, or a glass base material and epoxy resin, to obtain a copper clad laminated board. Etching resist is then applied to each section on the copper foil where the circuit pattern 61, the fixed contact pattern 5, and the cooper foil land patterns 62 and 63 are formed. Unnecessary copper portions where the etching resist is not applied, are removed by etching to form those patterns. The circuit pattern 61 including the fixed contact pattern 5 and the land patterns 62 and 63 are simultaneously formed. When the board 60 is constructed as a double-sided printed circuit board where the predetermined circuit patterns are formed on both sides of the board 60 and are connected via through holes 66, the back side of the board 60 may be used as a motherboard. In this case, various electronic components are mounted on the back side of the board 60.

In each of the land patterns 62 and 63 formed on the board 60 as described above, the copper foil exists below a slidably supporting portion 64A of the slidably supporting member 64 and a rotatably supporting portion 65A of the rotatably supporting member 65. During the vertical movement of the key top 9, the slidable shaft 20 formed at the lower end of the second link 15 slides on the copper foil below the supporting portion 64A and is supported in the supporting portion 64A. Similarly, the rotatable shaft 18 formed at the lower end of the first link 14 rotates on the copper foil below the supporting portion 65A and is supported in the supporting portion 65A. This construction reduces the resistances in the shafts 18 and 20 to rotate or slide, so that the operability of the key top 9 can be greatly improved.

To fix the supporting members 64 and 65 on the land patterns 62 and 63 formed on the circuit board 60 by soldering, the board 60 is set in a predetermined position with respect to an automatic soldering device. Then, solder paste is applied to the land patterns 62 and 63. Thereafter, with an automatic mounting device loading the supporting members 64 and 65, the fixing ends 64B, 65B of the supporting members 64 and 65 are placed on the solder paste layers formed on the land patterns 62 and 63. The reflow soldering process is then carried out. As a result, the supporting members 64 and 65 are soldered to the land patterns 62 and 63, respectively.

In the key switch device 3 described above, the rigid circuit board 60 has the circuit pattern 61 including the fixed contact pattern 5, and the land patterns 62 and 63 surrounding the fixed contact pattern 5 formed thereon. The metal supporting members 64 and 65 are fixed by soldering on the land patterns 62 and 63 of the board 60, so as to slidably support the slidable shaft 20 formed at the lower end of the second link 15 or rotatably support the shaft 18 formed at the lower end of the first link 14 of the guide member 10. It is therefore unnecessary to form supporting portions in the support plate by a press working. Accordingly, the need of a pressing die used in the press working is eliminated, and the manufacture cost of the key switch device 3 can be reduced. The need of producing such a die is also eliminated, so that the manufacture can be started earlier.

Even if the specifications of the keyboard 1 provided with a plurality of the key switch devices 3 are different on a country-to-country basis, it is sufficient to form land patterns 62 and 63 in response to the specifications and to fix the metal supporting members 64 and 65 on the land patterns 62 and 63 by soldering. This can increase the design flexibility of the keyboard 1 having the key switch devices 3 without preparation of a pressing die for the different specifications on a country-to-country basis.

The fixing ends 64B, 65B of the supporting members 64 and 65 are fixed by soldering on the land patterns 62 and 63 of the rigid circuit board 60. Accordingly, the support plate is not necessarily required, which enables the weight reduction of the key switch device 3. Even if the keyboard 1 is so configured that a plurality of the key switch devices 3 are supported on the board 60, the board 60, which has the great rigidity and shows little decrease in bending strength with the increase in the temperature of the thermosetting resin of the board 60, can support the entire keyboard 1, so that the support plate can be eliminated.

In the board 60 shown in Fig. 25A, the each of land patterns 62 and 63 is formed from one piece of copper foil so as to connect the soldering portions and a slidably or rotatably contacting portion. Alternatively, the land patterns 62 and 63 may be constructed as shown in Fig. 25B or Fig. 25C. In Fig. 25B, the land pattern 62, 63 is constructed of contact land 62B, 63B corresponding to a slidably supporting portion 64A of the slidably supporting member 64 or a rotatably supporting portion 65A of the rotatably supporting member 65, and connecting lands 62A, 63A formed at both ends of the contact land 62B, 63B. The fixing ends 64B, 65B of the supporting members 64 and 65 formed at each end thereof are fixed on the lands 62A and 63A, respectively with use of various fixing manners including the adhering manner with an adhesive and soldering manner. The slidable shaft 20 of the second link 15 and the rotatable shaft 18 of the first link 14 slidably or rotatably contacts the lands 62B and 63B, respectively.

In Fig. 25C, the land patterns 62 and 63 are first formed on the rigid circuit board 60. Then, an insulating resist film IF is applied to the land patterns 62 and 63 so as to expose the lands 62A and 63A. The fixing ends 64B, 65B of the supporting members 64 and 65 formed at each end thereof are fixed on the lands 62A and 63A, respectively with use of various fixing manners including the adhering manner with an adhesive and soldering manner. The slidably supporting portion 64A of the slidably supporting member 64 and the rotatably supporting portion 65A of the rotatably supporting member 65 correspond to the insulating resist film IF. The slidable shaft 20 of the second link 15 and the rotatable shaft 18 of the first link 14 slidably or rotatably contact the insulating resist film IF.

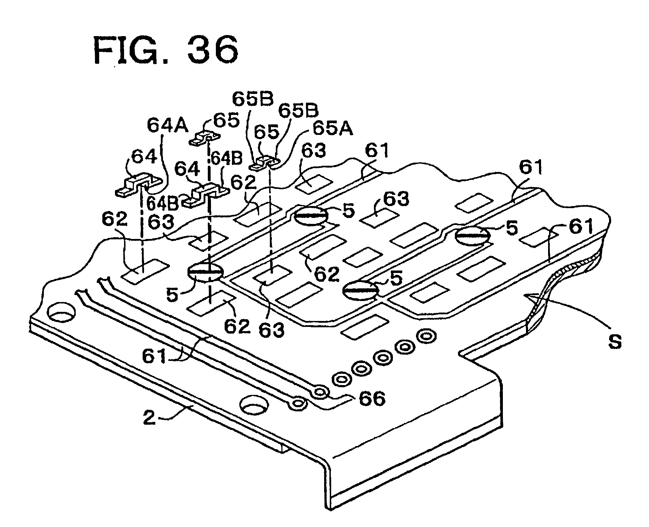

Furthermore, in the key switch device as shown in Fig. 25A, the rigid circuit board 60 has the fixed contact pattern 5, the circuit pattern 61, and the copper foil land patterns 62 and 63 which are simultaneously formed on the copper clad laminated board. On the land patterns 62 and 63, the slidably supporting member 64 and the rotatably supporting member 65 are fixed by soldering. Alternatively, the key switch device 3 may be constructed as shown in Fig. 36. In Fig. 36, a laminated material constructed of a PET film sheet S laminated with copper foil is used. Similar to the rigid circuit board 60, etching resist is applied to each section on the copper foil of the PET film sheet S where the circuit pattern 61, the fixed contact pattern 5, and the cooper foil land patterns 62 and 63 are formed. Unnecessary copper portions where the etching resist is not applied, are removed by etching to form those patterns. The thus formed PET film sheet S may alternatively be used. The slidably supporting member 64 and the rotatably supporting member 65 are fixed on the land patterns 62 and 63 formed on the sheet S respectively by the same fixing manner of soldering as in the fourth embodiment. In this modification, the support plate 2 is required to support the PET film sheet S at the underside thereof.

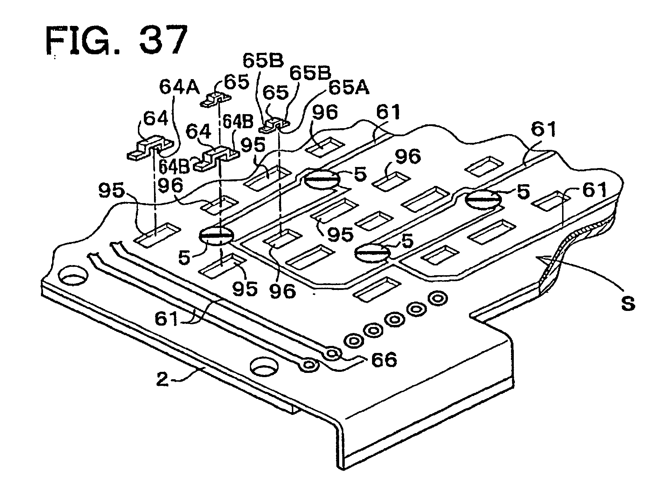

Further, although the slidably supporting member 64 and the rotatably supporting member 65 are fixed on the land patterns 62, 63 respectively in the above modification shown in Fig. 36, another modification may be conceivable as follows. That is, as shown in Fig. 37, the circuit pattern 61 is formed on the PET film sheet S according to the similar method to the above. However, the land patterns 62, 63 are not formed, but rectangular through-holes 95, 96 are formed in the PET film sheet S instead of the land patterns 62, 63. Here, the rectangular through-hole 95 corresponds to the slidably supporting member 64 and the rectangular through-hole 96 corresponds to the rotatably supporting member 65. Sizes of the through-holes 95, 96 are determined to become slightly larger than sizes of the supporting members 64, 65, so that the fixing ends 64B, 65B of the supporting members 64, 65 can contact with the surface of the metal support plate 2 through the through-holes 95, 96. And the fixing ends 64B of the slidably supporting member 64 and the fixing ends 65B of the rotatably supporting member 65 are fixed on the exposed surface of the support plate 2 through the through-holes 95, 96 by soldering.

## Claims

1. A key switch device (3) including:
a key top (9);
a plate member (2) disposed below the key top;
a guide member (10) provided with a first link (14) and a second link (15) which are mutually movably connected; and
a switching section (11) which is disposed on the plate member (2) and performs a switching operation in association with a vertical movement of the key top (9);
wherein the key switch device includes:
a first shaft (18) formed at a lower end of the first link (14);
a second shaft (20) formed at a lower end of the second link (15); and
a mounting member (6,30,40) for movably supporting the first (14) and second (15) shafts, the mounting member (6,30,40) being fixed on a surface of the plate member; **characterised in that**
the plate member is a circuit board (60) disposed below the key top, the circuit board having a switching circuit formed thereon and the mounting member being fixed on an upper surface of the circuit board; and further-comprising:
a fixing area formed on the circuit board, for fixing the mounting member on the circuit board; wherein
the fixing area is a metal land pattern (62,63) formed when the switching circuit is formed on the circuit board.

2. The key switch device according to claim 1, wherein the mounting member is formed in a chipped configuration having a unit length of the key switch device.

3. The key switch device according to claim 1, wherein a plurality of the key switch devices are disposed on the plate member, and the mounting member has a length required to movably support the first shaft of the first link and the second shaft of the second link of the guide member in each of the key switch device.

4. The key switch device according to claim 1, wherein the mounting member is fixed on the surface of the plate member with an adhesive applied to the surface of the plate member.

5. The key switch device according to claim 1, wherein the plate member is a support plate (2) disposed below the key top, and the support plate and the mounting member are made of metal material, and the mounting member is fixed on the surface of the support plate by welding.

6. The key switch device according to claim 5, wherein the mounting member is fixed on the surface of the support plate by soldering.

7. The key switch device according to claim 5, wherein the mounting member is fixed on the surface of the support plate by laser welding.

8. The key switch device according to claim 5, wherein the mounting member is fixed on the surface of the support plate by ultrasonic welding.

9. The key switching device according to claim 1, wherein the plate member is a membrane switch member (MS disposed below the key top, and the mounting member being fixed on a surface of the membrane switch member.

10. The key switch device according to claim 9, wherein the membrane switch member includes a film sheet with a switching electrode,
the switching member performs a switching operation in cooperation with the film sheet and the switching electrode in association with a vertical movement of the key top.

11. The key switch device according to claim 9, wherein the membrane switch member includes a membrane switch sheet (MS) having a pair of an upper film sheet (S1) and a lower film sheet (S2),
the switching member performs a switching operation with the membrane switch sheet in association with a vertical movement of the key top.

12. The key switch device according to claim 11, wherein the mounting member is formed in a chipped shape having a unit length of the key switch device.

13. The switch device according to claim 9, wherein a plurality of the key switch devices are disposed on the membrane switch member, and the mounting member has a length required to movably support the first shaft of the first link and the second shaft of the second link of the guide member in each of the key switch devices.

14. The key switch device according to claim 9, wherein the mounting member is fixed on the surface of the membrane switch member with an adhesive applied to the surface of the membrane switch member.

15. The key switch device according to claim 1, wherein the mounting member is made of metal, the mounting member being fixed to the metal land pattern by soldering.

16. The key switch device according to claim 1, wherein the mounting member includes at least a first mounting member and a second mounting member, and the metal land pattern includes at least a first land pattern to fix the first mounting member and a second land pattern to fix the second mounting member.

17. The key switch device according to claim 16, wherein the first mounting member slidably supports the second shaft of the second link and the second mounting member rotatably supports the first shaft of the first link.

18. The key switch device according to claim 17, wherein the first mounting member has a slidably supporting portion (8, 32, 42) to slidably support the second shaft of the second link between both fixing ends formed at both sides of the first mounting member, each fixing end being fixed on the first land pattern and the second mounting member has a rotatably supporting portion (7, 31, 41) to rotatably support the first shaft of the first link between both fixing ends formed at both sides of the second mounting member, each fixing end being fixed on the second land pattern.

19. The key switch device according to claim 18, wherein the first land pattern has a slidably supporting area corresponding to the supporting portion of the first mounting member and the second land pattern has a rotatably supporting area corresponding to the supporting portion of the second mounting member.

20. The key switch device according to claim 19, wherein the second shaft of the second link is slid while contacting with the supporting area of the first land pattern and the first shaft of the first link is rotated while contacting with the supporting area of the second land pattern.

21. The key switch device according to claim 19, wherein the supporting area of the first land pattern separates from fixing areas where both the fixing ends of the first mounting member are fixed and the supporting area of the second land pattern separates from fixing areas where both the fixing ends of the second mounting member are fixed.

22. The key switch device according to claim 19, further comprising an insulating resist film (IF) applied on the first and second land pattern;
fixing areas formed both sides of the first land pattern by applying the insulating resist film to the first land pattern so as to expose both sides of the first land pattern, both fixing ends of the first mounting member being fixed on the fixing areas; and
fixing areas formed both sides of the second land pattern by applying the insulating resist film to the second land pattern so as to expose both sides of the second land pattern, both fixing ends of the second mounting member being fixed on the fixing areas.

23. The key switch device according to claim 22, wherein both the supporting areas of the first and second land pattern are covered by the insulating resist film.

24. The key switch device according to claim 23, wherein the second shaft of the second link is slid while contacting with the insulating resist film corresponding to the supporting area of the first land pattern and the first shaft of the first link is rotated while contacting with the insulating resist film corresponding to the supporting area of the second land pattern.

25. The key switch device according to claim 1, wherein the circuit board is constructed from a rigid circuit board.

26. The key switch device according to claim 1, wherein the circuit board is constructed from a film circuit board.

27. The key switch device according to claim 9, wherein the membrane switch member is made transparent,
the key switch device further comprises an electro-luminescent sheet disposed below the membrane switch member, the electro-luminescent sheet backlighting the key top when a predetermined voltage is applied to the electro-luminescent sheet.

28. The key switch device according to claim 27, wherein the membrane switch member includes a transparent membrane switch sheet having a pair of an upper transparent sheet and a lower transparent sheet, and the switching member performs a switching operation with the membrane switch sheet in association with a vertical movement of the key top.

29. The key switch device according to claim 28, wherein the mounting member is fixed on an upper transparent surface of the upper film sheet of the membrane switch sheet.

30. The key switch device according to claim 1, wherein the plate member is a support plate (2) and a film circuit board disposed on the support plate and below the key top (9), the film circuit board having a switching circuit and a through-hole formed thereon and the mounting member being fixed on an upper surface of the support plate through the through-hole.

31. The key switch device according to claim 30, wherein the support plate and the mounting member are made of metal, the mounting member being fixed to the support plate through the through-hole by soldering.

32. A keyboard provided with a key switch device according to claim 1.

33. An electronic apparatus having a keyboard provided with a key switch device according to claim 1.

## Patentansprüche

1. Tastschaltervorrichtung (3) mit:
einem Tastenoberteil (9);
einem unter dem Tastenoberteil vorgesehenen Plattenteil (2);
einem Führungsteil (10), das mit einem ersten Glied (14) und einem zweiten Glied (15) versehen ist, die miteinander bewegbar verbunden sind;
einem Schaltabschnitt (11), der auf dem Plattenteil (2) vorgesehen ist und eine Schalttätigkeit in Zusammenhang mit einer vertikalen Bewegung des Tastenoberteiles (9) ausführt;
worin die Tastschaltervorrichtung aufweist:
eine an einem unteren Ende des ersten Gliedes (14) gebildete erste Welle (18);
eine an einem unteren Ende des zweiten Gliedes (15) gebildete zweite Welle (20); und
ein Anbringungsteil (6, 30, 50) zum bewegbaren Tragen der ersten (14) und der zweiten (15) Welle, wobei das Anbringungsteil (6, 30, 40) auf einer Oberfläche des Plattenteiles befestigt ist;
**dadurch gekennzeichnet,**
**daß** das Plattenteil eine Leiterplatte (60) ist, die unterhalb des Tastenoberteiles vorgesehen ist, wobei die Leiterplatte einen Schaltkreis aufweist, der darauf gebildet ist, und das Anbringungsteil auf einer oberen Oberfläche der Leiterplatte befestigt ist;
und weiter mit:
einem Befestigungsgebiet, das auf der Leiterplatte gebildet ist, zum Befestigen des Anbringungsteiles auf der Leiterplatte;
worin das Befestigungsgebiet ein Metallanschlußflächenmuster (62, 63) ist, das gebildet wird, wenn der Schaltkreis auf der Leiterplatte gebildet wird.

2. Tastschaltervorrichtung nach Anspruch 1, bei der das Anbringungsteil in einer abgetrennten Konfiguration mit einer Einheitslänge der Tastschaltervorrichtung gebildet ist.

3. Tastschaltervorrichtung nach Anspruch 1, bei der eine Mehrzahl der Tastschaltervorrichtungen auf dem Plattenteil vorgesehen ist, das Anbringungsteil eine Länge aufweist, die zum bewegbaren Tragen der ersten Welle des ersten Gliedes und der zweiten Welle des zweiten Gliedes des Führungsteiles in jeder der Tastschaltervorrichtungen benötigt ist.

4. Tastschaltervorrichtung nach Anspruch 1, bei der das Anbringungsteil auf der Oberfläche des Plattenteiles mit einem Klebstoff befestigt ist, der auf die Oberfläche des Plattenteiles aufgebracht ist.

5. Tastschaltervorrichtung nach Anspruch 1, bei der das Plattenteil eine Tragplatte (2) ist, die unter dem Tastenoberteil vorgesehen ist, und die Tragplatte und das Anbringungsteil aus einem Metallmaterial hergestellt sind und das Anbringungsteil auf der Oberfläche der Tragplatte durch Schweißen befestigt ist.

6. Tastschaltervorrichtung nach Anspruch 5, bei der das Anbringungsteil auf der Oberfläche der Tragplatte durch Löten befestigt ist.

7. Tastschaltervorrichtung nach Anspruch 5, bei der das Anbringungsteil auf der Oberfläche der Tragplatte durch Laserschweißen befestigt ist.

8. Tastschaltervorrichtung nach Anspruch 5, bei der das Anbringungsteil auf der Oberfläche der Tragplatte durch Ultraschallschweißen befestigt ist.

9. Tastschaltervorrichtung nach Anspruch 1, bei der das Plattenteil ein Membranschaltteil (MS) ist, das unter dem Tastenoberteil vorgesehen ist, wobei das Anbringungsteil auf einer Oberfläche des Membranschaltteiles befestigt ist.

10. Tastschaltervorrichtung nach Anspruch 9, bei der das Membranschaltteil ein Filmblatt mit einer Schaltelektrode enthält,
das Schaltteil eine Schalttätigkeit in Zusammenwirkung mit dem Filmblatt und der Schaltelektrode in Zusammenhang mit einer vertikalen Bewegung des Tastenoberteiles ausführt.

11. Tastschaltervorrichtung nach Anspruch 9, bei dem das Membranschaltteil ein Membranschaltblatt (MS) mit einem Paar eines oberen Filmblattes (S1) und eines unteren Filmblattes (S2) enthält,
das Schaltteil eine Schalttätigkeit mit dem Membranschaltblatt in Zusammenhang mit einer vertikalen Bewegung des Tastenoberteiles ausführt.

12. Tastschaltervorrichtung nach Anspruch 11, bei dem das Anbringungsteil in einer abgetrennten Form mit einer Einheitslänge der Tastschaltervorrichtung gebildet ist.

13. Tastschaltervorrichtung nach Anspruch 9, bei der eine Mehrzahl der Tastschaltervorrichtungen auf dem Membranschaltteil vorgesehen ist und das Anbringungsteil eine Länge aufweist, die zum bewegbaren Tragen der ersten Welle des ersten Gliedes und der zweiten Welle des zweiten Gliedes des Führungsteiles in jeder der Tastschaltervorrichtungen benötigt ist.

14. Tastschaltervorrichtung nach Anspruch 9, bei der das Anbringungsteil auf der Oberfläche des Membranschaltteiles mit einem Klebstoff befestigt ist, der auf die Oberfläche des Membranschaltteiles aufgebracht ist.

15. Tastschaltervorrichtung nach Anspruch 1, bei der das Anbringungsteil aus Metall hergestellt ist, wobei das Anbringungsteil auf dem Metallanschlußflächenmuster durch Löten befestigt ist.

16. Tastschaltervorrichtung nach Anspruch 1, bei der das Anbringungsteil mindestens ein erstes Anbringungsteil und ein zweites Anbringungsteil enthält und das Metallanschlußflächenmuster mindestens ein erstes Anschlußflächenmuster zum Befestigen des ersten Anbringungsteiles und ein zweites Anschlußflächenmuster zum Befestigen des zweiten Anbringungsteiles enthält.

17. Tastschaltervorrichtung nach Anspruch 16, bei der das erste Anbringungsteil gleitfähig die zweite Welle des zweiten Gliedes trägt und das zweite Anbringungsteil drehbar die erste Welle des ersten Gliedes trägt.

18. Tastschaltervorrichtung nach Anspruch 17, bei der das erste Anbringungsteil einen gleitfähigen Tragabschnitt (8, 32, 42) zum gleitfähigen Tragen der zweiten Welle des zweiten Gliedes zwischen beiden Befestigungsenden aufweist, die an beiden Seiten des ersten Anbringungsteiles gebildet sind, wobei jedes Befestigungsende auf dem ersten Anschlußflächenmuster befestigt ist, und das zweite Anbringungsteil einen drehbaren Tragabschnitt (7, 31, 41) zum drehbaren Tragen der ersten Welle des ersten Gliedes zwischen beiden Befestigungsenden aufweist, die an beiden Seiten des zweiten Anbringungsteiles gebildet sind, wobei jedes Befestigungsende auf dem zweiten Anschlußflächenmuster befestigt ist.

19. Tastschaltervorrichtung nach Anspruch 18, bei der das erste Anschlußflächenmuster ein gleitfähiges Traggebiet entsprechend dem Tragabschnitt des ersten Anbringungsteiles aufweist und das zweite Anschlußflächenmuster ein drehbares Traggebiet entsprechend dem Tragabschnitt des zweiten Anbringungsteiles aufweist.

20. Tastschaltervorrichtung nach Anspruch 19, bei der die zweite Welle des zweiten Gliedes geschoben wird, während sie in Kontakt mit dem Traggebiet des ersten Anschlußflächenmusters steht, und die erste Welle des ersten Gliedes gedreht wird, während sie in Kontakt mit dem Traggebiet des zweiten Anschlußflächenmusters steht.

21. Tastschaltervorrichtung nach Anspruch 19, bei der das Traggebiet des ersten Anschlußflächenmusters von den Befestigungsgebieten getrennt ist, an denen die beiden Befestigungsenden des ersten Anbringungsteiles befestigt sind, und das Traggebiet des zweiten Anschlußflächenmusters von den Befestigungsgebieten getrennt ist, bei denen die beiden Befestigungsenden des zweiten Anbringungsteiles befestigt sind.

22. Tastschaltervorrichtung nach Anspruch 19, weiter mit einem Isolierharzfilm (IF), der auf das erste und das zweite Anschlußflächenmuster aufgebracht ist;
Befestigungsgebieten, die auf beiden Seiten des ersten Anschlußflächenmusters durch Aufbringen des Isolierharzfilmes auf das erste Anschlußflächenmuster so gebildet sind, daß beide Seiten des ersten Anschlußflächenmusters offenliegen, wobei beide Befestigungsenden des ersten Anbringungsteiles auf den Befestigungsgebieten befestigt sind; und
Befestigungsgebieten, die an beiden Seiten des zweiten Anschlußflächenmusters durch Aufbringen des Isolierharzfilmes auf das zweite Anschlußflächenmuster so gebildet sind, daß beide Seiten des zweiten Anschlußflächenmusters offenliegen, wobei beide Befestigungsenden des zweiten Anbringungsteiles auf den Befestigungsgebieten befestigt sind.

23. Tastschaltervorrichtung nach Anspruch 22, bei der beide Traggebiete des ersten und des zweiten Anschlußflächenmusters durch den Isolierharzfilm bedeckt sind.

24. Tastschaltervorrichtung nach Anspruch 23, bei der die zweite Welle des zweiten Gliedes geschoben wird, während es in Kontakt mit dem Isolierharzfilm entsprechend dem Traggebiet des ersten Anschlußflächenmusters steht, und die erste Welle des ersten Gliedes gedreht wird, während sie in Kontakt mit dem Isolierharzfilm entsprechend dem Traggebiet des zweiten Anschlußflächenmusters steht.

25. Tastschaltervorrichtung nach Anspruch 1, bei der die Leiterplatte aus einer starren Leiterplatte aufgebaut ist.

26. Tastschaltervorrichtung nach Anspruch 1, bei der die Leiterplatte aus einer Filmleiterplatte aufgebaut ist.

27. Tastschaltervorrichtung nach Anspruch 9, bei der das Membranschaltteil durchsichtig hergestellt ist,
die Tastschaltervorrichtung weiter ein elektroluminiszentes Blatt aufweist, das unter dem Membranschaltteil vorgesehen ist, wobei das elektroluminiszente Blatt das Tastenoberteil von hinten beleuchtet, wenn eine vorbestimmte Spannung an das elektroluminiszente Blatt angelegt wird.

28. Tastschaltervorrichtung nach Anspruch 27, bei der das Membranschaltblatt ein durchsichtiges Membranschaltblatt mit einem Paar eines oberen transparenten Blattes und eines unteren transparenten Blattes enthält und das Schaltteil eine Schalttätigkeit mit dem Membranschaltblatt in Zusammenhang mit einer vertikalen Bewegung des Tastenoberteiles ausführt.

29. Tastschaltervorrichtung nach Anspruch 28, bei dem das Anbringungsteil auf einer oberen durchsichtigen Oberfläche des oberen Filmblattes des Membranschaltblattes befestigt ist.

30. Tastschaltervorrichtung nach Anspruch 1, bei der das Plattenteil eine Tragplatte (2) und eine Filmleiterplatte ist, die auf der Tragplatte und unterhalb des Tastenoberteiles (9) vorgesehen ist, wobei die Filmleiterplatte einen Schaltkreis und ein Durchgangsloch, die darauf gebildet sind, aufweist und das Anbringungsteil auf einer oberen Oberfläche der Tragplatte durch das Durchgangsloch befestigt ist.

31. Tastschaltervorrichtung nach Anspruch 30, bei der die Tragplatte und das Anbringungsteil aus Metall hergestellt sind, wobei das Anbringungsteil auf der Tragplatte durch das Durchgangsloch durch Löten befestigt ist.

32. Tastatur, die mit einer Tastschaltervorrichtung nach Anspruch 1 versehen ist.

33. Elektronisches Gerät mit einer Tastatur, die mit einer Tastschaltervorrichtung nach Anspruch 1 versehen ist.

## Revendications

1. Dispositif de commutateur à touche (3) comprenant :
un capuchon de touche (9),
un élément de plaque (2) placé sous le capuchon de touche,
un élément de guide (10) muni d'une première liaison (14) et d'une seconde liaison (15) qui sont reliées mutuellement de façon mobile, et
une section de commutation (11) qui est placée sur l'élément de plaque (2), et exécute une opération de commutation en association avec un mouvement vertical du capuchon de touche (9),
dans lequel le dispositif de commutateur à touche comprend :
un premier axe (18) formé sur une extrémité inférieure de la première liaison (14),
un second axe (20) formé sur une extrémité inférieure de la seconde liaison (15), et
un élément de montage (6, 30, 40) destiné à supporter de façon mobile les premier (14) et second (15) axes, l'élément de montage (6, 30, 40) étant fixé sur une surface de l'élément de plaque, **caractérisé en ce que**
l'élément de plaque est une carte de circuit (60) placée sous le capuchon de touche, la carte de circuit comportant un circuit de commutation formé sur celle-ci, et l'élément de montage étant fixé sur une surface supérieure de la carte de circuit, et comprenant en outre :
une zone de fixation formée sur la carte de circuit, pour fixer l'élément de montage sur la carte de circuit,
dans lequel
la zone de fixation est un motif de plages métallique (62, 63) formée lorsque le circuit de commutation est formé sur la carte de circuit.

2. Dispositif de commutateur à touche selon la revendication 1, dans lequel l'élément de montage est formé selon une configuration en lamelle ayant une longueur élémentaire du dispositif de commutateur à touche.

3. Dispositif de commutateur à touche selon la revendication 1, dans lequel une pluralité de dispositifs de commutateurs à touche sont placés sur l'élément de plaque, et l'élément de montage présente une longueur nécessaire pour supporter de façon mobile le premier axe de la première liaison et le second axe de la seconde liaison de l'élément de guidage dans chacun des dispositifs de commutateurs à touche.

4. Dispositif de commutateur à touche selon la revendication 1, dans lequel l'élément de montage est fixé à la surface de l'élément de plaque avec un adhésif appliqué à la surface de l'élément de plaque.

5. Dispositif de commutateur à touche selon la revendication 1, dans lequel l'élément de plaque est une plaque de support (2) placée sous le capuchon de touche, et la plaque de support ainsi que l'élément de montage sont réalisés dans un matériau métallique, et l'élément de montage est fixé sur la surface de la plaque de support par soudage.

6. Dispositif de commutateur à touche selon la revendication 5, dans lequel l'élément de montage est fixé sur la surface de la plaque de support par brasage.

7. Dispositif de commutateur à touche selon la revendication 5, dans lequel l'élément de montage est fixé sur la surface de la plaque de support par soudage au laser.

8. Dispositif de commutateur à touche selon la revendication 5, dans lequel l'élément de montage est fixé sur la surface de la plaque de support par soudage ultrasonique.

9. Dispositif de commutateur à touche selon la revendication 1, dans lequel l'élément de plaque est un élément de commutateur à membrane (élément MS placé sous le capuchon de touche), et l'élément de montage étant fixé sur une surface de l'élément de commutateur à membrane.

10. Dispositif de commutateur à touche selon la revendication 9, dans lequel l'élément de commutateur à membrane comprend une feuille de film avec une électrode de commutation,
l'élément de commutation exécute une opération de commutation en coopération avec la feuille de film et l'électrode de commutation en association avec un mouvement vertical du capuchon de touche.

11. Dispositif de commutateur à touche selon la revendication 9, dans lequel l'élément de commutateur à membrane comprend une feuille de commutateur à membrane (MS) possédant une paire d'une feuille de film supérieure (S1) et d'une feuille de film inférieure (S2),
l'élément de commutation exécute une opération de commutation avec la feuille de commutateur à membrane en association avec un mouvement vertical du capuchon de touche.

12. Dispositif de commutateur à touche selon la revendication 11, dans lequel l'élément de montage est formé sous forme de lamelle présentant une longueur élémentaire du dispositif de commutateur à touche.

13. Dispositif de commutateur à touche selon la revendication 9, dans lequel une pluralité de dispositifs de commutateurs à touche sont placés sur l'élément de commutateur à membrane, et l'élément de montage présente une longueur nécessaire pour supporter de façon mobile le premier axe de la première liaison et le second axe de la seconde liaison de l'élément de guidage dans chacun des dispositifs de commutateurs à touche.

14. Dispositif de commutateur à touche selon la revendication 9, dans lequel l'élément de montage est fixé à la surface de l'élément de commutateur à membrane avec un adhésif appliqué à la surface de l'élément de commutateur à membrane.

15. Dispositif de commutateur à touche selon la revendication 1, dans lequel l'élément de montage est fait de métal, l'élément de montage étant fixé au motif de plages métallique par brasage.

16. Dispositif de commutateur à touche selon la revendication 1, dans lequel l'élément de montage comprend au moins un premier élément de montage et un second élément de montage, et le motif de plages métallique comprend au moins un premier motif de plages pour fixer le premier élément de montage et un second motif de plages pour fixer le second élément de montage.

17. Dispositif de commutateur à touche selon la revendication 16, dans lequel le premier élément de montage supporte avec possibilité de coulissement le second axe de la seconde liaison, et le second élément de montage supporte avec possibilité de rotation le premier axe de la première liaison.

18. Dispositif de commutateur à touche selon la revendication 17, dans lequel le premier élément de montage comporte une partie de support avec possibilité de coulissement (8, 32, 42) pour supporter avec possibilité de coulissement le second axe de la seconde liaison entre les deux extrémités de fixation formées des deux côtés du premier élément de montage, chaque extrémité de fixation étant fixée sur le premier motif de plages, et le second élément de montage présente une partie de support avec possibilité de rotation (7, 31, 41) pour supporter avec possibilité de rotation le premier axe de la première liaison entre les deux extrémités de fixation formées des deux côtés du second élément de montage, chaque extrémité de fixation étant fixée sur le second motif de plages.

19. Dispositif de commutateur à touche selon la revendication 18, dans lequel le premier motif de plages présente une zone de support avec possibilité de coulissement correspondant à la partie de support du premier élément de montage, et le second motif de plages présente une zone de support avec possibilité de rotation correspondant à la partie de support du second élément de montage.

20. Dispositif de commutateur à touche selon la revendication 19, dans lequel le second axe de la seconde liaison coulisse tout en étant en contact avec la zone de support du premier motif de plages, et le premier axe de la première liaison est entraîné en rotation tout en étant en contact avec la zone de support du second motif de plages.

21. Dispositif de commutateur à touche selon la revendication 19, dans lequel la zone de support du premier motif de plages sépare des zones de fixation où les deux extrémités de fixation du premier élément de montage sont fixées, et la zone de support du second motif de plages sépare des zones de fixation où les deux extrémités de fixation du second élément de montage sont fixées.

22. Dispositif de commutateur à touche selon la revendication 19, comprenant en outre un film de résist isolant (IS) appliqué sur les premier et second motifs de plages,
des plages de fixation formées des deux côtés du premier motif de plages en appliquant le film de résist isolant au premier motif de plages de sorte à exposer les deux côtés du premier motif de plages, les deux extrémités de fixation du premier élément de montage étant fixées sur les zones de fixation, et
des zones de fixation formées des deux côtés du second motif de plages en appliquant le film de résist isolant au second motif de plages de sorte à exposer les deux côtés du second motif de plages, les deux extrémités de fixation du second élément de montage étant fixées sur les zones de fixation.

23. Dispositif de commutateur à touche selon la revendication 22, dans lequel les deux zones de support des premier et second motifs de plages sont couvertes par le film de résist isolant.

24. Dispositif de commutateur à touche selon la revendication 23, dans lequel le second axe de la seconde liaison est amené à coulisser tout en étant en contact avec le film de résist isolant correspondant à la zone de support du premier motif de plages, et le premier axe de la première liaison tourne tout en étant en contact avec le film de résist isolant correspondant à la zone de support du second motif de plages.

25. Dispositif de commutateur à touche selon la revendication 1, dans lequel la carte de circuit est conçue à partir d'une carte de circuit rigide.

26. Dispositif de commutateur à touche selon la revendication 1, dans lequel la carte de circuit est conçue à partir d'une carte de circuit à film.

27. Dispositif de commutateur à touche selon la revendication 9, dans lequel l'élément de commutateur à membrane est rendu transparent,
le dispositif de commutateur à touche comprend en outre une feuille électroluminescente placée sous l'élément de commutateur à membrane, la feuille électroluminescente rétro-éclairant le capuchon de touche lorsqu'une tension prédéterminée est appliquée à la feuille électroluminescente.

28. Dispositif de commutateur à touche selon la revendication 27, dans lequel l'élément de commutateur à membrane comprend une feuille de commutateur à membrane transparente comportant une paire d'une feuille transparente supérieure et d'une feuille transparente inférieure, et l'élément de commutation exécute une opération de commutation avec la feuille de commutateur à membrane en association avec un mouvement vertical du capuchon de touche.

29. Dispositif de commutateur à touche selon la revendication 28, dans lequel l'élément de montage est fixé sur une surface supérieure transparente de la feuille de film supérieure de la feuille de commutateur à membrane.

30. Dispositif de commutateur à touche selon la revendication 1, dans lequel l'élément de plaque est une plaque de support (2) et une carte de circuit à film placée sur la plaque de support et sous le capuchon de touche (9), la carte de circuit à film ayant un circuit de commutation et un trou traversant formé sur celle-ci, et l'élément de montage étant fixé sur une surface supérieure de la plaque de support au travers du trou traversant.

31. Dispositif de commutateur à touche selon la revendication 30, dans lequel la plaque de support et l'élément de montage sont faits de métal, l'élément de montage étant fixé par brasage sur la plaque de support au travers du trou traversant.

32. Clavier prévu avec un dispositif de commutateur à touche selon la revendication 1.

33. Dispositif électronique ayant un clavier muni d'un dispositif de commutateur à touche selon la revendication 1.
